(19) Europäisches Patentamt
European Patent Office
Office européen des brevets

(11) **EP 4 706 787 A1**

(12) **EUROPEAN PATENT APPLICATION**
published in accordance with Art. 153(4) EPC

(43) Date of publication:
**11.03.2026 Bulletin 2026/11**

(21) Application number: **24797240.9**

(22) Date of filing: **24.01.2024**

(51) International Patent Classification (IPC):
***A62D 1/00*** (2006.01)

(52) Cooperative Patent Classification (CPC):
Y02E 60/10

(86) International application number:
**PCT/KR2024/001122**

(87) International publication number:
**WO 2024/225578 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023 KR 20230054334**

(71) Applicants:
• **Lee, Yong Kwon**
**Gwangmyeong-si Gyeonggi-do 14232 (KR)**

• **Rotary Safety Co., Ltd.**
**Gwacheon-si Gyeonggi-do 13813 (KR)**

(72) Inventor: **LEE, Yong Kwon**
**Gwangmyeong-si Gyeonggi-do 14232 (KR)**

(74) Representative: **Morrall, Jonathan Ian McLachlan et al**
**Kilburn & Strode LLP**
**Lacon London**
**84 Theobalds Road**
**London WC1X 8NL (GB)**

(54) **FIRE EXTINGUISHING MATERIAL FOR LITHIUM BATTERY**

(57) A fire extinguishing material for lithium battery fire suppression, of the present invention, is composed of: a granular first fire extinguishing material, which is prepared by firing a silica powder and the like and which has a predetermined size; a second fire extinguishing material of a single-layer graphene compound applied, in multiple layers, to the surface of the first fire extinguishing material; and a third fire extinguishing material made of a metal carbonate covalently bonded or applied to the graphene compound. During a lithium battery fire, when the fire extinguishing material of the present invention is applied to a fire source through a discharge means such as a fire extinguisher, the fire extinguishing material is put on top of the fire source, the second fire extinguishing material, that is, the metal carbonate, which comes in direct contact with the fire source, adsorbs carbon dioxide, which is most abundantly generated from the fire source, so as to absorb radicals while being converted into a bicarbonate, thereby primarily extinguishing the fire, and the graphene compound, which is the second fire extinguishing material with excellent thermal conductivity, rapidly releases heat from the fire to the outside so as to improve, by means of effective cooling, fire extinguishing performance for the lithium battery fire, thereby preventing thermal runaway during the lithium battery fire, and extinguishes the lithium battery fire together with an additional smothering effect of the first fire extinguishing material, and thus can prevent the spread of fire.

FIG. 4

**Description**

[Technical Field]

The present invention relates to a fire extinguishing material for suppressing a lithium battery fire, which is composed of different types of fire extinguishing materials and thus improves the fire extinguishing performance of a lithium ion battery by sequential action of the different types of fire extinguishing materials.

[Background Art]

Currently, lithium-ion batteries are used in various fields such as electric vehicles, energy storage systems, emergency power systems, and the like.

The lithium battery may generate heat by itself due to various internal chemical reactions and the like, and when it is damaged by physical impact from the outside and the like, short circuits may occur inside the battery, which causes a fire. Accordingly, various fire extinguishing devices for suppressing fires occurring in the battery have been developed.

In conventional battery fire extinguishing devices, as disclosed in Korean Registered Patent No. 10-2303096 (September 10, 2021), a first fire extinguishing agent is formed in a powder form including ammonium dihydrogen phosphate and stone powder as main components, a second fire extinguishing agent is formed in the form of granules prepared by foaming powdered glass, and they are mounted on separate internal members.

However, such conventional lithium battery fire extinguishing devices have a disadvantage that it takes a long time to completely extinguish a fire because the second fire extinguishing agent formed of foamed powder exhibits high thermal insulation and thus delays cooling.

Amerex Corporation (US) uses copper powder in a fire extinguisher for lithium battery fires, and the copper powder provides an excellent cooling effect due to its good thermal conductivity, but there is a problem that it is not economical due to an excessively high manufacturing cost.

[Disclosure]

[Technical Problem]

Therefore, the present invention is directed to providing a fire extinguishing material for a lithium battery, which includes a first fire extinguishing material prepared in granular form having a predetermined size by firing silica powder, a second fire extinguishing material formed by applying a graphene compound on the surface of the first fire extinguishing material, and a third fire extinguishing material formed by covalently bonding/applying a metal carbonate to/on the graphene compound, and thus is capable of improving battery fire extinguishing performance by maximizing the fire extinguishing reaction and negative catalytic effect of the third fire extinguishing material during a fire and sequentially implementing the rapid cooling effect of the graphene compound, which is the second fire extinguishing material, and the smothering effect of the first fire extinguishing material in a combined manner.

The present invention is also directed to providing a fire extinguishing material for a battery, which is prepared by sequentially applying a second fire extinguishing material and a third fire extinguishing material on the open surface of a first fire extinguishing material, and thus is capable of maximizing the storage capacity of fire extinguishing materials per unit area, thereby reducing the size of a fire extinguishing device.

The present invention is also directed to providing a fire extinguishing material for a lithium battery fire, which is composed of three types or more of fire extinguishing materials and thus is capable of improving fire extinguishing performance for a lithium battery fire by sequential action of the fire extinguishing materials.

[Technical Solution]

In order to achieve the objectives, there is provided a fire extinguishing material for suppressing a lithium battery fire, which includes a first fire extinguishing material prepared in granular form by firing a powder; a second fire extinguishing material including a graphene compound applied on the surface of the first fire extinguishing material; and a third fire extinguishing material including a metal carbonate covalently bonded to or applied on the graphene compound, wherein the powder is one or more selected from microsilica, glass powder, alumina, calcium chloride, and kaolin powder.

The powder may have a diameter of 0.01 to 4.0 mm and a specific surface area of 15,000 to 60,000 $m^2$/kg.

The powder may have a bulk density of 0.2 to 1.6 $g/cm^3$.

The graphene compound may include a plurality of single-layer graphene sheets, a hydroxyl group (-OH) may be present on the surface of the single-layer graphene sheet, and a phosphate ($-PO_3$) may be present at the end of the single-layer graphene sheet.

A coating thickness of the second fire extinguishing material may be 0.33 μm to 0.50 μm.

The metal carbonate may include one or more metals of an alkali metal and an alkaline earth metal.

A coating amount of the metal carbonate may be 0.05 wt% to 10 wt% with respect to the first fire extinguishing material.

[Advantageous Effects]

As described above, the present invention provides a fire extinguishing material for a lithium battery, which includes a first fire extinguishing material prepared in granular form having a predetermined size by firing silica powder, a second fire extinguishing material formed by applying a graphene compound on the surface of the first fire extinguishing material, and a third fire extinguishing material formed by separately applying a metal carbonate on the graphene compound, and thus can improve battery fire extinguishing performance by maximizing the fire extinguishing reaction and negative catalytic effect of the third fire extinguishing material during the fire and simultaneously implementing the rapid cooling effect of the graphene compound, which is the second fire extinguishing material, and the smothering effect of the first fire extinguishing material.

The present invention also provides a fire extinguishing material for suppressing a battery fire, which is prepared by sequentially applying a second fire extinguishing material and a third fire extinguishing material on the surface of a first fire extinguishing material through covalent bonding or coating, and thus can maximize the storage capacity of fire extinguishing materials per unit area, thereby reducing the size of a fire extinguishing device.

The present invention also provides a fire extinguishing material for suppressing a lithium battery fire, which is composed of three types of fire extinguishing materials such as a first fire extinguishing material, a second fire extinguishing material, and a third fire extinguishing material and combines the functions of multiple fire extinguishing materials by including various types of carbonates and phosphates in the fire extinguishing material of the present invention, and thus can effectively improve fire extinguishing performance in response to a lithium battery fire with various fire sources such as plastics, gases, oil, electricity, and metals.

[Description of Drawings]

FIG. 1 is a cross-sectional view of a first fire extinguishing material according to one embodiment of the present invention.

FIG. 2 is a cross-sectional view showing that a first fire extinguishing material is coated with a second fire extinguishing material.

FIG. 3 is an enlarged view of the region A of FIG. 2.

FIG. 4 is a cross-sectional view of a fire extinguishing material for suppressing a lithium battery fire according to one embodiment of the present invention.

FIG. 5 is a view of a single-layer graphene sheet according to one embodiment of the present invention.

FIG. 6 is a flowchart of a method of preparing a fire extinguishing material for suppressing a lithium battery fire according to one embodiment of the present invention.

[Modes of the Invention]

Hereinafter, embodiments of the present invention will be described in detail with reference to the accompanying drawings. In describing the embodiments, the size and shape of components shown in the drawings may be exaggerated for clarity and convenience of description. In addition, terms specifically defined in consideration of the configuration and operation of the present invention may vary depending on a user or operator's intentions or customs. Therefore, the meanings of these terms should be interpreted based on the contents throughout the present specification.

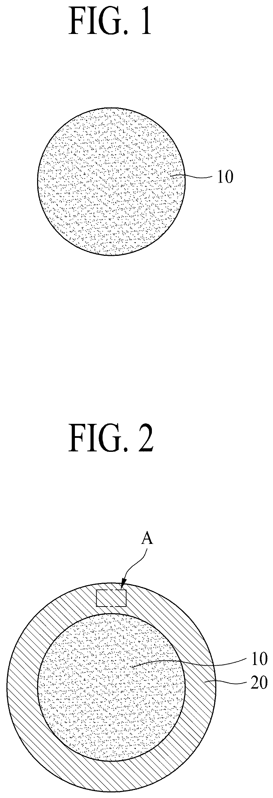

FIG. 1 is a cross-sectional view of a first fire extinguishing material 10 according to one embodiment of the present invention.

According to one embodiment of the present invention, the first fire extinguishing material 10 is prepared by firing a powder and is in granular form.

Here, the powder may be one or more selected from microsilica, glass powder, alumina, calcium chloride, and kaolin powder.

According to one embodiment of the present invention, the first fire extinguishing material may have a diameter of 0.01 to 4.0 mm.

When the diameter of the first fire extinguishing material 10 is 0.01 to 4.0 mm, a smothering effect that blocks the inflow of oxygen from the outside can be efficiently provided, and economical preparation is possible.

On the other hand, when the diameter of the first fire extinguishing material 10 is less than 0.01 mm, the preparation cost is increased due to the excessively small particle diameter, and thus economic efficiency relative to the fire extinguishing effect may be decreased.

In addition, when the diameter of the first fire extinguishing material 10 exceeds 4.0 mm, the size of the first fire extinguishing material 10 significantly increases. As a result, the surface area of the first fire extinguishing material 10 relative to the same mass is reduced, and thus a smothering effect may not be efficiently provided.

According to one embodiment of the present invention, the first fire extinguishing material 10 may have a specific surface area of 15,000 to 60,000 $m^2$/kg.

When the specific surface area of the first fire extinguishing material 10 is 15,000 to 60,000 $m^2$/kg, a smothering effect that blocks the inflow of oxygen from the outside can be efficiently provided.

On the other hand, when the specific surface area of the first fire extinguishing material 10 is less than 15,000 $m^2$/kg, the area of the first fire extinguishing material 10 in contact with the outside is excessively reduced, and thus a smothering effect may not be efficiently provided.

In addition, when the specific surface area of the first fire extinguishing material 10 exceeds 60,000 $m^2$/kg, the size of the first fire extinguishing material 10 significantly increases. As a result, the surface area of the first fire extinguishing material 10 relative to the same mass is reduced, and thus a smothering effect may not be efficiently provided.

According to one embodiment of the present invention, the first fire extinguishing material 10 may have a bulk density of 0.2 to 1.6 g/cm$^3$.

When the bulk density of the first fire extinguishing material 10 is 0.2 to 1.6 g/cm$^3$, a smothering effect that blocks the inflow of oxygen from the outside can be efficiently provided.

On the other hand, when the bulk density of the first fire extinguishing material 10 is less than 0.2 g/cm$^3$, the first fire extinguishing material 10 may not have a uniform shape and may have difficulty in being discharged through a fire extinguisher due to its very light weight, and thus it may be difficult to apply it to a typical fire extinguisher. Also, even when the first fire extinguishing material is discharged, dust obstructs visibility, which may affect a fire suppression effect.

In addition, when the bulk density of the first fire extinguishing material 10 exceeds 1.6 g/cm$^3$, the surface area of the first fire extinguishing material 10 may be reduced. As a result, a smothering effect that blocks the inflow of oxygen from the outside may not be efficiently provided.

FIG. 2 is a cross-sectional view showing that a first fire extinguishing material is coated with a second fire extinguishing material.

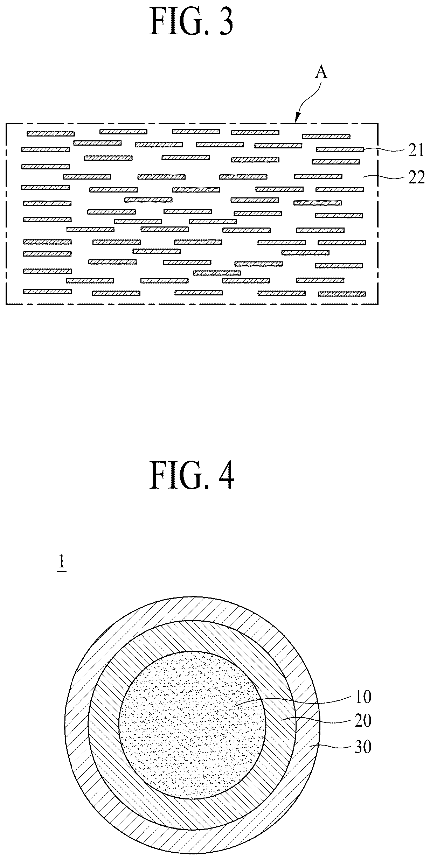

FIG. 3 is an enlarged view of the region A of FIG. 2.

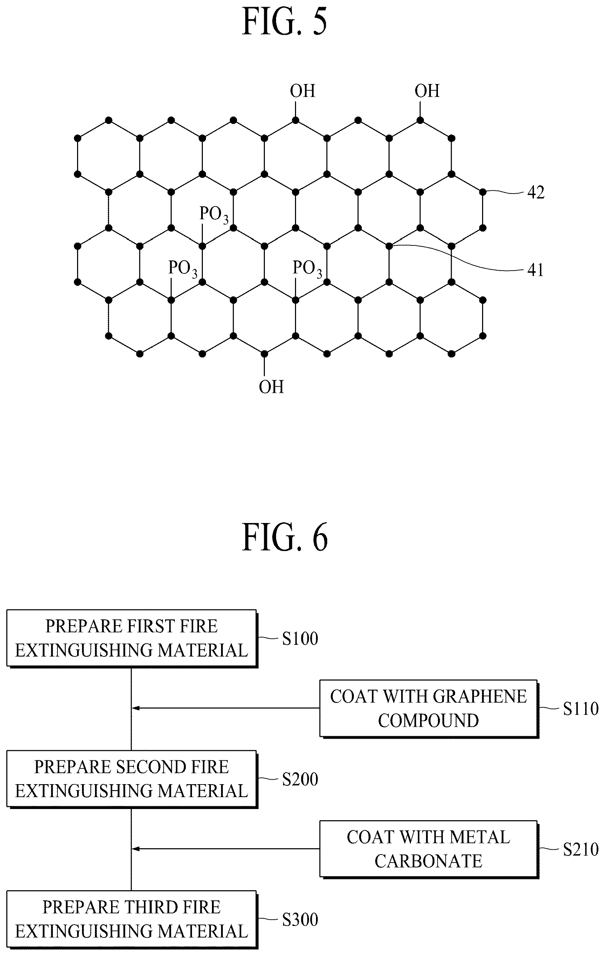

FIG. 5 is a diagram of a single-layer graphene sheet 21 according to one embodiment of the present invention.

According to one embodiment of the present invention, a second fire extinguishing material 20 includes a graphene compound and a binder 22 applied on the surface of the first fire extinguishing material 10.

The graphene compound according to one embodiment of the present invention may include a plurality of single-layer graphene sheets 21, and the binder 22 may include an inorganic binder or an organic binder. Preferably, the binder 22 according to one embodiment of the present invention may be polyvinyl alcohol (PVA).

According to one embodiment of the present invention, a hydroxyl group (-OH) may be present on a surface 41 of the single-layer graphene sheet 21, and a phosphate (-PO$_3$) may be present at an end 42 of the single-layer graphene sheet 21 (see FIG. 5).

Here, the end 42 of the single-layer graphene sheet 21 refers to carbon (C) present in the outermost layer of the single-layer graphene sheet 21, and the surface 41 of the single-layer graphene sheet 21 refers to carbon (C) disposed in the remaining region excluding the outermost layer.

According to one embodiment of the present invention, a coating thickness of the second fire extinguishing material 20 may be 0.33 to 0.50 $\mu$m.

When the coating thickness of the second fire extinguishing material 20 is 0.33 to 0.50 $\mu$m, thermal conduction rapidly occurs through the graphene compound, and thus heat resulting from a fire may be released to the outside, thereby efficiently preventing thermal runaway in a lithium battery fire.

One the other hand, when the coating thickness of the second fire extinguishing material 20 is less than 0.33 $\mu$m, there may be difficulty in forming the second fire extinguishing material 20 on the surface of the first fire extinguishing material 10.

In addition, when the coating thickness of the second fire extinguishing material 20 exceeds 0.50 $\mu$m, the second fire extinguishing material 20 becomes excessively thick, and thus thermal conduction through the graphene compound may slow down. As a result, there may be difficulty in preventing thermal runaway in a lithium battery fire.

FIG. 4 is a cross-sectional view of a fire extinguishing material 1 for suppressing a lithium battery fire according to one embodiment of the present invention.

According to one embodiment of the present invention, the fire extinguishing material 1 for suppressing a lithium battery fire is prepared by forming a third fire extinguishing material 30 on the surface of the second fire extinguishing material 20 applied on the first fire extinguishing material 10.

According to one embodiment of the present invention, the third fire extinguishing material 30 includes a metal carbonate covalently bonded to or applied on the graphene compound.

Here, the metal carbonate may include one or more metals of an alkali metal and an alkaline earth metal.

According to one embodiment of the present invention, a coating amount of the metal carbonate may be 0.05 to 10 wt% with respect to the first fire extinguishing material 10.

More specifically, the metal carbonate included in the third fire extinguishing material 30 may be present in an amount of 0.05 to 10 wt% with respect to the first fire extinguishing material 10.

FIG. 6 is a flowchart of a preparation method according to one embodiment of the present invention.

Referring to FIG. 6, a method of preparing the fire extinguishing material 1 for suppressing a lithium battery fire according to one embodiment of the present invention is divided into a step of preparing a first fire extinguishing material (S100), a step of preparing a second fire extinguishing material (S200), and a step of preparing a third fire extinguishing material (S300), and specifically includes a step of coating a first fire extinguishing material 10 with a graphene compound (S110) and a step of coating the resulting second fire extinguishing material 20 with a metal carbonate (S210) to prepare a third fire extinguishing material 30.

### <Preparation of first fire extinguishing material 10 (S100)>

900 g of finely ground silica powder or glass powder (200 mesh or less) and 100 g of sodium silicate are mixed with 300 g of purified water to prepare a slurry, and the slurry is spray-dried to form spherical granules. The granulated powder is fired in an oven at 750 °C for 3 hours to obtain a first fire extinguishing material 10.

In the following Table 1, the physical properties of silica powder and glass powder are summarized.

[Table 1]

|  | Particle shape | Size ($\mu$m) | Bulk density (g/cm$^3$) | Surface area (m$^2$/g) |
|---|---|---|---|---|
| Silica powder composition | Spherical | 60.5 | 1.6 | 60 |
| Glass powder composition | Spherical | 69.3 | 1.9 | 56 |

The first fire extinguishing material 10 is easy to handle, transport and store due to having a light weight and a low specific gravity, and is resistant to external environmental factors such as moisture, heat, corrosion, and organic solvents. The first fire extinguishing material 10 is non-flammable, can be stored for a long time, is environmentally friendly, and can be easily removed after fire extinguishment, and the unmelted fire extinguishing material can be reused.

The first fire extinguishing material 10 is non-toxic, non-reactive with fiber solvents, odorless, non-allergenic, and radiologically harmless, so it does not affect the user when used.

The particle diameter, specific surface area, and bulk density of the powder are measured as follows. Also, the particle diameter, specific surface area, and bulk density of the first fire extinguishing material are measured by the same methods.

### Particle diameter measurement method

A particle diameter measured by a micro particle size analyzer (Mastersizer 3000), which is a particle size measuring device using laser diffraction technology, is determined as a particle diameter according to the present invention.

### Specific surface area measurement method

A "specific surface area" is measured according to the BET method, and is specifically calculated from the amount of nitrogen gas adsorbed at a liquid nitrogen temperature (77 K) using BELSORP-mini II from BEL Japan. In other words, a specific surface area in the present invention may mean a specific surface area measured by the above-described method.

### Bulk density measurement method

1) A 100 ml graduated cylinder is filled with 50 g of a sample, covered with a stopper, and then leveled.

2) The leveled cylinder is subjected to up-and-down vibrations 200 times, and then the settled scale on the cylinder is read.

3) A bulk density is calculated using the following equation.

[Equation]

$$\text{Bulk density (g/cm}^3\text{)} = \text{Sample weight (g) / Settled volume (cm}^3\text{)}$$

The first fire extinguishing material 10 has a melting point of 860 °C, and when the temperature is increased to 860 °C or higher during a battery fire, the first fire extinguishing material melts, is attached to the surface of the battery, and performs a fire extinguishing action of blocking the battery from the outside and blocking the supply of oxygen to the battery. Also, it prevents the battery fire from spreading to other areas or other batteries.

**<Preparation of second fire extinguishing material 20 (S200) and coating (S110)>**

1,000 g of the obtained first fire extinguishing material 10 is added to 1,500 mL of a mixture containing purified water, 3 wt% of a graphene compound, and 1.5 wt% of silica sol as an inorganic binder, and stirred in a mixer at 105 °C for 3 to 4 hours to evaporate the purified water, thereby obtaining a second fire extinguishing material 20 in which the first fire extinguishing material 10 is coated with the graphene compound as shown in FIG. 2.

The graphene compound is prepared by partially modifying the Hummers method which is a typical preparation method. Graphite powder, sulfuric acid ($H_2SO_4$), phosphoric acid ($H_3PO_4$), hydrogen peroxide ($H_2O_2$), and potassium permanganate ($KMnO_4$), which are raw materials used in the preparation, are purchased from Daejung Chemicals & Metals and processed as follows.

When graphite powder (4.0 g, 1 wt%) and $KMnO_4$ (24.0 g, 6 wt%) are added to a mixture containing phosphoric acid ($H_3PO_4$) and sulfuric acid ($H_2SO_4$) in a ratio of 9:1 (360 mL:40 mL), the heat of reaction is generated at 35 °C, and stirring is performed for 12 hours while heating to 50 °C to continue the reaction. Afterward, the reaction product is cooled to room temperature, 3 mL of 30% hydrogen peroxide ($H_2O_2$) is added, and the resulting mixture is input into a cooling bath. When the addition is completed, a yellow precipitate is produced, which is known to be graphene oxide particles. The precipitate is obtained in a maximum amount when the mixture is allowed to stand overnight. The upper clear water is decanted, and the yellow slurry is centrifuged at 3,000 rpm for 20 minutes. The clear water is decanted, the precipitate is washed with purified water three times and then further washed with ethanol three times, and the resulting solid is dried in an oven at 40 °C overnight to obtain graphene compound powder.

The graphene compound of the present invention includes a plurality of single-layer graphene sheets as shown in FIG. 5. A hydroxyl group (OH) is present on the surface of the single-layer graphene sheet, and functional groups such as a carboxyl group and a phosphate ($-PO_3$) are present at the end of the single-layer graphene sheet. The functional group may serve as a linker capable of chemically bonding to a third fire extinguishing material, and the phosphate serves as a flame retardant. Since the graphene compound has a high thermal conductivity of at most 5,000 W/mK, it more effectively performs cooling by transferring and releasing heat generated during a lithium fire to the outside than copper (400 W/mK). Therefore, fire extinguishing performance is excellent.

**<Preparation of third fire extinguishing material 30 (S300) and coating (S210)>**

A method of applying a metal carbonate on the surface of the above-described second fire extinguishing material according to the present invention is as follows.

In the case of a third fire extinguishing material according to the present invention, a metal carbonate and 1 wt% of polyvinyl alcohol (PVA) as an organic binder are dissolved in a solvent, stirred while heating at 50 °C or higher for 1 to 2 hours, and then dried to obtain a metal carbonate applied as nanoparticles on the surface of the second fire extinguishing material.

In this case, water or an organic solvent may be used as the solvent, and the metal carbonate is selected from an alkali metal and an alkaline earth metal, such as sodium (Na), potassium (K), calcium (Ca), and strontium (Sr), but is not limited thereto. The metal carbonate is preferably present in an amount of 0.05 wt% to 15 wt%, and more preferably, 0.05 wt% to 10 wt% with respect to the first fire extinguishing material. Finally, a third fire extinguishing material in the form of $M_2CO_3$ may be obtained.

Meanwhile, in order to help understand a fire extinguishing agent, a conventional powdered fire extinguishing agent will be described in further detail. There are one to four types of powdered fire extinguishing agents.

The first type of powdered fire extinguishing agent includes sodium hydrogen carbonate ($NaHCO_3$) as a main

component and mainly provides fire extinguishing effects such as smothering, cooling, negative catalytic, and saponification effects.

The thermal decomposition reaction schemes (270 °C, 850 °C) are as follows:

$$2NaHCO_3 \rightarrow Na_2CO_3 + H_2O + CO_2\uparrow - 30.3 \text{ kcal}$$

$$2NaHCO_3 \rightarrow Na_2O + H_2O\uparrow + 2CO_2 - 104.4 \text{ kcal.}$$

The smothering effect is provided by carbonate gas and water vapor generated during thermal decomposition, the cooling effect is provided by an endothermic action during thermal decomposition, and the negative catalytic effect is provided by reacting metal ions ($Na^+$) generated during thermal decomposition with OH and H free radicals generated from a fire source to inhibit a combustion reaction.

The second type of powdered fire extinguishing agent includes potassium hydrogen carbonate ($KHCO_3$) as a main component and mainly provides fire extinguishing effects such as smothering, cooling, negative catalytic, and saponification effects.

The thermal decomposition reaction schemes (190 °C, 590 °C) are as follows:

$$2KHCO_3 \rightarrow K_2CO_3 + H_2O\uparrow + CO_2\uparrow - Q \text{ kcal}$$

$$2KHCO_3 \rightarrow K_2O + H_2O\uparrow + 2CO_2\uparrow - Q \text{ kcal.}$$

The smothering effect is provided by carbonate gas and water vapor generated during thermal decomposition, the cooling effect is provided by an endothermic action during thermal decomposition, and the negative catalytic effect is provided by reacting metal ions ($K^+$) generated during thermal decomposition with OH and H free radicals generated from a fire source to inhibit a combustion reaction. Since the K ion of the second type of powder is more reactive than the Na ion of the first type of powder, an excellent negative catalytic effect is provided, and since the K ion reacts at a lower temperature, it exhibits a better fire extinguishing effect.

The third type of powdered fire extinguishing agent includes ammonium dihydrogen phosphate ($NH_4H_2PO_4$) as a main component and mainly provides fire extinguishing effects such as smothering, cooling, and negative catalytic effects.

The thermal decomposition reaction schemes (166 °C, 360 °C) are as follows:

$$NH_4H_2PO_4 \rightarrow NH_3 + H_3PO_4 - Q \text{ kcal}$$

$$NH_4H_2PO_4 \rightarrow HPO_3 + NH_3 + H_2O - 76.95 \text{ kcal.}$$

The smothering effect is provided by the non-flammable gas $NH_3$ and water vapor generated during thermal decomposition, the cooling effect is provided by an endothermic action during thermal decomposition, and the negative catalytic effect is provided by reacting free ions ($NH4^+$) generated during thermal decomposition with OH and H free radicals generated from a fire source to inhibit a combustion reaction. Ortho-phosphoric acid produced in the reaction process dehydrates and carbonizes cellulose to promote fire extinguishment, and when a fire temperature further increases, ortho-phosphoric acid is converted into stable meta-phosphoric acid to form a glass film and thus prevents the carbonized combustion material from being further combusted to suppress a fire.

The fourth type of powdered fire extinguishing agent includes potassium hydrogen carbonate ($KHCO_3$) and urea as main components and mainly provides fire extinguishing effects such as smothering, cooling, and negative catalytic effects, and it is the most effective among the powdered fire extinguishing agents.

The thermal decomposition reaction scheme (190 °C, 590 °C) is as follows:

$$2KHCO_3 + (NH_2)_2CO \rightarrow K_2CO_3 + 2NH_3 + 2CO_2 + CO_2\uparrow - Q \text{ kcal.}$$

This fire extinguishing agent is a combination of urea and potassium hydrogen carbonate which has strong fire extinguishing power even when used alone. Although its particles have a normal size, the particles are decomposed into fine particles like shotgun pellets upon contact with flames, and thus have a large specific surface area, thereby exhibiting strong fire extinguishing power.

When the fire extinguishing material of the present invention is applied to a lithium battery fire, it is typical that the fire extinguishing material is sprayed onto a fire source through a fire extinguisher to cover the fire source.

Among gases generated during a lithium battery fire, $CO_2$ is generated in a large amount, and this carbon dioxide ($CO_2$) gas reacts with the metal carbonate, which is the third fire extinguishing material, to form a metal bicarbonate.

$$M_2CO_3 + CO_2 + H_2O \rightarrow 2MHCO_3 + heat$$

Here, $MHCO_3$ is the main component of the above-described first or second type of powder, such as $NaHCO_3$ or $KHCO_3$, and exhibits the same effects of the fire extinguishing agent. The fire extinguishing material layered on a fire source continuously absorbs carbon dioxide and is thus transformed into a powdered fire extinguishing agent.

The second fire extinguishing material 20 exhibits a rapid cooling effect by rapidly transferring and releasing heat generated from the third fire extinguishing material 30 and the fire source to the outside.

The first fire extinguishing material 10 finally exhibits a smothering effect to block the inflow of oxygen from the outside, prevent flames from spreading to the outside, and cover a flammable material to block the supply of fuel to a fire source, thereby rapidly suppressing a fire and preventing reignition.

Although the present invention has been described with reference to specific exemplary embodiments, the present invention is not limited thereto. It is clear that various modifications or changes may be made by those skilled in the art without departing from the spirit of the present invention.

## Claims

1. A fire extinguishing material for suppressing a lithium battery fire, comprising:

   a first fire extinguishing material prepared in granular form by firing a powder;
   a second fire extinguishing material including a graphene compound applied on the surface of the first fire extinguishing material; and
   a third fire extinguishing material including a metal carbonate covalently bonded to or applied on the graphene compound,
   wherein the powder is one or more selected from microsilica, glass powder, alumina, calcium chloride, and kaolin powder.

2. The fire extinguishing material of claim 1, wherein the first fire extinguishing material has a diameter of 0.01 to 4.0 mm.

3. The fire extinguishing material of claim 1, wherein the first fire extinguishing material has a specific surface area of 15,000 to 60,000 $m^2$/kg.

4. The fire extinguishing material of claim 1, wherein the first fire extinguishing material has a bulk density of 0.2 to 1.6 $g/cm^3$.

5. The fire extinguishing material of claim 1, wherein the graphene compound includes a plurality of single-layer graphene sheets,
   a hydroxyl group (-OH) is present on the surface of the single-layer graphene sheet and a phosphate ($-PO_3$) is present at the end of the single-layer graphene sheet.

6. The fire extinguishing material of claim 1, wherein a coating thickness of the second fire extinguishing material is 0.33 $\mu$m to 0.50 $\mu$m.

7. The fire extinguishing material of claim 1, wherein the metal carbonate includes one or more metals of an alkali metal and an alkaline earth metal.

8. The fire extinguishing material of claim 1, wherein a coating amount of the metal carbonate is 0.05 wt% to 10 wt% with respect to the first fire extinguishing material.

9. A method of preparing a fire extinguishing material for suppressing a lithium battery fire, comprising:

   firing a powder to prepare a granular first fire extinguishing material;
   coating the first fire extinguishing material with a graphene compound to form a second fire extinguishing material; and
   coating the second fire extinguishing material with a metal carbonate to form a third fire extinguishing material,
   wherein the powder is one or more selected from microsilica, glass powder, alumina, calcium chloride, and kaolin powder.

**10.** The method of claim 9, wherein the first fire extinguishing material has a diameter of 0.01 to 4.0 mm.

**11.** The method of claim 9, wherein the first fire extinguishing material has a specific surface area of 15,000 to 60,000 $m^2$/kg.

**12.** The method of claim 9, wherein the first fire extinguishing material has a bulk density of 0.2 to 1.6 g/$cm^3$.

# FIG. 1

# FIG. 2

# FIG. 3

# FIG. 4

# FIG. 5

# FIG. 6

## INTERNATIONAL SEARCH REPORT

| International application No. |
|---|
| **PCT/KR2024/001122** |

| | |
|---|---|
| **A.    CLASSIFICATION OF SUBJECT MATTER** | |

**A62D 1/00**(2006.01)i

According to International Patent Classification (IPC) or to both national classification and IPC

| **B.      FIELDS SEARCHED** |
|---|

Minimum documentation searched (classification system followed by classification symbols)

A62D 1/00(2006.01); A62C 3/16(2006.01); B09B 3/35(2022.01); B09B 3/80(2022.01); B82B 3/00(2006.01);
C04B 14/00(2006.01); C09D 7/40(2018.01); D06M 11/83(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 소화분말(fire extinguishing powder), 그래핀화합물(graphene
compound), 마이크로실리카(micro silica), 비표면적(specific surface area), 금속탄산염(metal carbonate)

| **C.      DOCUMENTS CONSIDERED TO BE RELEVANT** |
|---|

| Category* | Citation of document, with indication, where appropriate, of the relevant passages | Relevant to claim No. |
|---|---|---|
| A | KR 10-2454923 B1 (LEE, Yong Kwon) 17 October 2022 (2022-10-17)<br>    See claims 1-10. | 1-12 |
| A | KR 10-2328735 B1 (GFI CO., LTD.) 22 November 2021 (2021-11-22)<br>    See claims 1-8. | 1-12 |
| A | KR 10-2503625 B1 (SONGHAK ENVIRONMENT DEVELOPMENT CO., LTD.) 24 February 2023<br>(2023-02-24)<br>    See claims 1-4. | 1-12 |
| A | KR 10-2198710 B1 (AGENCY FOR DEFENSE DEVELOPMENT) 05 January 2021 (2021-01-05)<br>    See claims 1-14. | 1-12 |
| A | KR 10-2011-0093971 A (LEE, Jae Hwan) 19 August 2011 (2011-08-19)<br>    See claim 1. | 1-12 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 May 2024** | **02 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/001122**

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|----------------------|
| PX | KR 10-2564844 B1 (LEE, Yong Kwon et al.) 09 August 2023 (2023-08-09)<br>See claims 1-6.<br>This document is a published earlier application that serves as a basis for claiming priority of the present international application. | 1-12 |

Form PCT/ISA/210 (second sheet) (July 2022)

**INTERNATIONAL SEARCH REPORT**
Information on patent family members

| | International application No. |
|---|---|
| | **PCT/KR2024/001122** |

| Patent document cited in search report | Publication date (day/month/year) | Patent family member(s) | Publication date (day/month/year) |
|---|---|---|---|
| KR 10-2454923 B1 | 17 October 2022 | None | |
| KR 10-2328735 B1 | 22 November 2021 | None | |
| KR 10-2503625 B1 | 24 February 2023 | None | |
| KR 10-2198710 B1 | 05 January 2021 | None | |
| KR 10-2011-0093971 A | 19 August 2011 | None | |
| KR 10-2564844 B1 | 09 August 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102303096